# EUROPEAN PATENT APPLICATION

(11) **EP 4 206 771 A1**
(43) Date of publication of application: **05.07.2023**
(21) Application number: 22216110.1
(22) Date of filing: 22.12.2022
(51) Int. Cl.: G02B 6/44

(54) **OPTICAL FIBER CABLE WITH MOVABLE RIPCORD**

(30) Priority: 28.12.2021 IN 202111061175
(71) Applicant: Sterlite Technologies Limited, Haryana 122002 (IN)
(72) Inventor: Marru, Pramod, 122002 Gurugram (IN); Kumar, Sravan, 122002 Gurugram (IN)
(74) Representative: Petraz, Gilberto Luigi

(57) **Abstract**

The present disclosure relates to an optical fiber cable with a movable ripcord having a core (110) with one or more optical transmission elements (114), a first layer (106) surrounding the core, a second layer (102) surrounding the first layer and one or more ripcords (108) placed between the first layer and the second layer such that the one or more ripcords have a degree-of-angular movement less than the angular distance between two consecutive ripcords of the optical fiber cable. The second layer is relatively harder than the first layer and the first layer is deformed radially towards a central axis (X) of the optical fiber cable.

## Description

### TECHNICAL FIELD

Embodiments of the present disclosure relate to the field of optical fiber cables used for the distribution of the optical network, and more particularly, relates to optical fiber cable with movable ripcord in between a flexible surface surrounding a core and a hard surface (inner surface of a sheath).

This application claims the benefit of Indian Application No 202111061175 titled "Optical Fiber Cable with Movable RipCord" filed by the applicant on 28/12/2021, which is incorporated herein by reference in its entirety.

### BACKGROUND ART

Telecommunication cables are ubiquitous and used for distributing all manner of data across vast networks. The majority of cables are electrically conductive cables (typically copper), although the use of optical fiber cables is growing rapidly in telecommunication systems as larger and larger amounts of data are transmitted. Additionally, as data transmissions increase, the fiber optic network is being extended closer to the end-user which can be a premises, business, or private residence. Optical fiber cables have secured an important position in building the optical network of modern communication systems across the globe. The optical fiber cables are part of millions of miles of the optical network. From mountain regions to shorelines, from remote villages to urban environments, engineers have installed optical fiber cables almost in every region for better connectivity and high bandwidth.

An optical fiber (e.g., glass, plastic) carries light along its length. Light is kept in the core of the optical fiber by internal reflection. The optical fiber acts as a waveguide. Optical fiber can be used as a communication medium for telecommunication and networking applications because it is flexible and can be bundled into cables. Although referred to as "optical fiber," optical fiber is not restricted to communicating light in the visible spectrum, and may transmit light signals of higher or lower wavelengths. Optical fiber is advantageous for communications because light propagates through the fiber with less attenuation as compared to electrical signals using metal wires. This facilitates long-distance communications using few repeaters.

As telecommunication cables are routed across data networks, it is necessary to periodically open the cable so that one or more telecommunication lines therein may be spliced or otherwise connected to other cables or "branches" and to be distributed across the telecommunication network. Often, it is necessary to break open the (or strip) a jacket/sheath of an optical fiber cable in order to gain access to a core or other elements/component, for example, to connect an optical fiber cable to another optical fiber cable or to a piece of equipment.

Ripcords (or ripcords) help in stripping the optical fiber cable. The ripcord is provided in a gap between the cable body and the reinforcing sheet and is used for ripping the reinforcing sheet and the outer sheath when the optical fiber cable is disassembled or when the mid-span branching work is performed. Ripcords rip cable components, for example, an armor tape of the fiber optic cable and/or the cable jacket, whereby the tear facilitates removal of the armor tape and/or the cable jacket for accessing buffer tubes having optical fibers therein. Conventional ripcords are threads or yarns made from dielectric materials such as nylon, aramid fiber, or polyester. The dielectric thread or yarn size of a conventional ripcord is generally specified by a denier.

In the currently employed cable designs, a ripcord is embedded in the sheath due to which, a part of the sheath which is below the ripcord, towards the core, does not get stripped.

US patent application no. US8280209B2 titled "Cable conduits having ripcords for longitudinally slitting the conduit and related methods" discloses the placement of the ripcord inside a channel in a sheath.

Indian patent application no. IN201721000660A titled "PREINSTALLED OPTICAL FIBER CABLE ASSEMBLY" discloses the placement of the ripcord between a cable and a duct.

US patent application no. US6813421 B2 titled "Fiber optic cable having a ripcord" discloses a fiber optic cable including a cable core having at least one optical fiber and a ripcord. In particular, the ripcord is formed from a semiconductive material, the ripcord is removably attached to at least one cable component, and/or the ripcord has an excess length.

However, there are a number of drawbacks in the currently similar technologies employing the optimized placement of the ripcord in the optical fiber cable. In particular, none of the above mentioned prior arts as well as conventional optical fiber cables provides a convincing solution to easily and smoothly access the ripcords and the core. Therefore, specialized tools are required to access the ripcord before stripping the sheath, thereby making a core access process time consuming and cumbersome. Moreover, when there is a portion where the reinforcing sheet is rounded and overlapped, if the ripcord is positioned inside the overlapping portion, the force required to rip the reinforcing sheet becomes extremely large, thereby causing a reduction in manufacturing efficiency. Further, certain cable components like corrugated metal armor layers can require relatively high forces in order for the conventional ripcord to rip therethrough. However, relatively high forces can cause conventional ripcords to break during the ripping action, which is undesirable. Additionally, the craftsman can unintentionally sever the conventional ripcord when he is trying to expose and access the conventional ripcord.

In light of the above-stated discussion, there is a need to overcome the above-stated disadvantages/problems, there is an urgent need for a technical solution that overcomes the above-stated limitations in the prior arts. The present disclosure focuses on providing an optical fiber cable with a movable ripcord in between a flexible surface surrounding a core and a hard surface (inner surface of a sheath).

### SUMMARY OF THE DISCLOSURE

Embodiments of the present disclosure provide an optical fiber cable comprising a core having one or more optical transmission elements, a first layer surrounding the core, a second layer surrounding the first layer and one or more ripcords placed between the first layer and the second layer such that the one or more ripcords have a degree of angular movement (Df) less than ±d. In particular, the second layer is relatively harder than the first layer. Moreover, d is an angular distance between two consecutive ripcords of the optical fiber cable.

According to the first aspect, a force required for the angular movement of one or more ripcords is less than 5N.

According to a second aspect of the present disclosure,the first layer is defined by a first shore D hardness of less than or equal to 20.

In accordance with an embodiment of the present disclosure, the second layer is defined by a second shore D hardness of greater than or equal to 40.

According to the third aspect of the present disclosure, one or more ripcords have the angular movement of less than 180° in 1 meter of the optical fiber cable.

In accordance with the embodiment of the present disclosure, one or more ripcords have the angular movement of less than 45° in 1 meter of the optical fiber cable.

According to the fourth aspect of the present disclosure, the first layer is deformed radially towards a central axis (X) of the optical fiber cable.

In accordance with an embodiment of the present disclosure, the first layer is deformed in vicinity of the one or more ripcords.

According to the fifth aspect of the present disclosure, deformation of the first is equal to or greater than the diameter of one or more ripcords.

In accordance with an embodiment of the present disclosure, the second layer is configured to embed one or more strength members.

In accordance with an embodiment of the present disclosure, the one or more strength members is made of FRP (Fiber Reinforced Plastic), ARP (Aramid-Reinforced Plastic) or any other suitable dielectric/strength material.

In accordance with an embodiment of the present disclosure, one or more strength members are coated with EAA (Ethylene Acrylic Acid) or EVA (Ethylene-Vinyl Acetate) coating.

In accordance with an embodiment of the present disclosure, one or more strength members is a central strength member.

In accordance with an embodiment of the present disclosure, the ripcords have a flat shape, monochord, cabled structure depending on user requirement.

In accordance with an embodiment of the present disclosure, one or more optical transmission elements are encapsulated in one or more buffer tubes in the core.

In accordance with an embodiment of the present disclosure, the first layer is a flexible layer composed of water blocking tape (WBT), aramid yarns, glass roving yarns, water-swellable yarns.

In accordance with an embodiment of the present disclosure, the second layer is a jacket or a sheath.

In accordance with an embodiment of the present disclosure, the sheath includes polyvinylchloride, polyethene (such as High-Density Poly Ethylene (HDPE), Medium Density Poly Ethylene, and Low-Density Poly Ethylene), polyurethane, thermoplastic rubber/elastomer, thermoplastic chlorinated polyethene or combination thereof.

In accordance with an embodiment of the present disclosure, the second layer is a steel tape layer, ECCS (Electro Chrome Coated Steel) tape layer.

In accordance with an embodiment of the present disclosure, the optical fiber may be a single-core optical fiber, a multi-core optical fiber, a single-mode optical fiber, a multimode optical fiber

The foregoing solutions of the present disclosure are attained by employing an optical fiber cable with a movable ripcord in between a flexible surface surrounding a core and a hard surface (inner surface of a sheath).

### BRIEF DESCRIPTION OF DRAWINGS

To describe the technical solutions in the embodiments of the present disclosure or in the prior art more clearly, the following briefly describes the accompanying drawings required for describing the embodiments of the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating an exemplary optical fiber cable with a movable ripcord in accordance with an embodiment of the present disclosure;
Fig. 2 is a snapshot illustrating another exemplary optical fiber cable with two movable ripcords that are 180 degrees apart in accordance with an embodiment of the present disclosure;
Fig. 3 is a snapshot illustrating yet another exemplary optical fiber cable with two movable ripcords and one of the ripcords is moved from its initial position in accordance with an embodiment of the present disclosure.

### REFERENCE LIST

Optical fiber cable - 100, 200, 300
Second layer - 102
One or more strength members - 104
First layer - 106
One or more ripcords 108
Core - 110
One or more buffer tubes - 112
One or more optical transmission elements - 114
Deformation - 116

The optical cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### Following terms shall apply throughout the present disclosure:

Optical fiber refers to a medium associated with the transmission of information over long distances in the form of light pulses. The optical fiber uses light to transmit voice and data communications over long distances when encapsulated in a jacket/sheath.

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

Sheathing is the process of squeezing a molten sheathing material through a funnel of a die as the core runs through the center. Sheathing (extrusion) is done at a high temperature (preferably more than 100°C).

Crush resistance is an ability of a cable to withstand and/or recover from the effects of a compressive force.

Denier is the weight of yarn mass in grams and is measured by weighing 9,000 meters of yarn.

Ply is the number of yarns that are twisted around one another to create one single thread/cord.

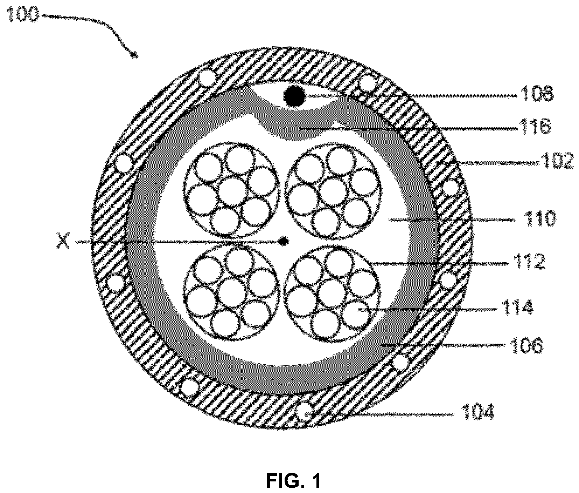

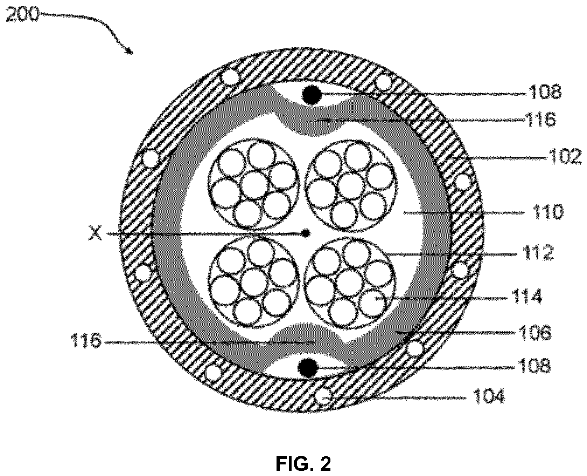

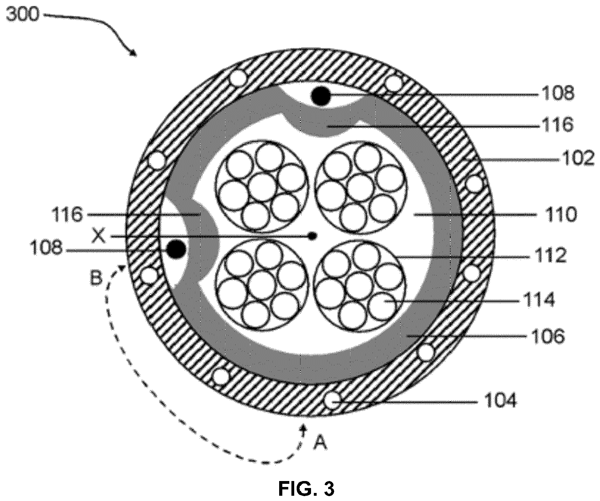

Fig. 1 is a snapshot illustrating an exemplary optical fiber cable with a movable ripcord in accordance with an embodiment of the present disclosure. Fig. 2 is a snapshot illustrating another exemplary optical fiber cable with two movable ripcords that are 180 degrees apart in accordance with an embodiment of the present disclosure. Fig. 3 is a snapshot illustrating yet another exemplary optical fiber cable with two movable ripcords and one of the ripcords is moved from its initial position in accordance with an embodiment of the present disclosure.

Referring to Fig. 1 to Fig. 3, the optical fiber cable 100, 200, 300 may include a core 110 having one or more optical transmission elements (i.e., optical fibers) 114, a first layer 106, a second layer 102 embeddings one or more strength members 104 and one or more ripcords 108. In particular, one or more optical transmission elements are present in form of, but not limited to,a group of loose optical fibers, a group of optical fiber ribbons or a stack of optical fiber ribbons, a group of rollable ribbons, a group of corrugated ribbons,a group of partially bonded optical fiber ribbons, a group of flat ribbons.

In accordance with one or more embodiments, the optical fiber may be of ITU.T G.657.A2 category. Alternatively, the optical fiber may be of ITU.T G.657.A1 or G.657.B3 or G.652.D or other suitable categories.

The optical fiber may be a bend-insensitive fiber with less degradation in optical properties or less increment in optical attenuation during bending of the optical fiber cable. Thus, the bend-insensitive fiber further helps to maintain the optical properties during multiple winding/unwinding operations of the optical fiber cable.

In some embodiments, the optical fibers may be coloured fiber. Alternatively, it may not be coloured.

In different embodiments, the optical fiber may be a single-core optical fiber, a multi-core optical fiber, a single-mode optical fiber, a multimode optical fiber or the like. In particular, the single-mode optical fiber carries only a single mode of light and the multimode optical fiber carries multiple modes of light to propagate. Moreover, the multicore optical fibers comprise multiple cores and the single-core optical fiber comprise only a single core.

A core of the optical fiber cable may be a uni-tube/monotube design comprised of a single buffer tube or loose tube carrying one or more optical transmission elements. Alternatively, a core of the optical fiber cable may be a multitube design comprised of two or more buffer tubes or loose tubes carrying the optical transmission elements. Particularly, the buffer tube is used in an optical fiber cable to provide mechanical isolation and protection to the optical fibers from physical damages.

Alternatively, the core may comprise a plurality of optical fiber ribbon bundles. The optical fiber ribbon bundle includes a plurality of optical fiber ribbons arranged/grouped together using one or more binders. In particular, the optical fiber ribbon includes a number of optical fibers arranged together using a matrix material. Alternatively, multiple individual optical fiber ribbons are stacked or grouped into a bundle to form the optical fiber ribbon bundle. Furthermore, a partially bonded optical fiber ribbon from the group of intermittently bonded optical fiber ribbons is formed by intermittently bonding the plurality of optical fibers with the matrix material that imparts a bending and rolling capability along a width of the partially bonded optical fiber ribbon.

In accordance with an embodiment of the present disclosure, one or more optical transmission elements114 are encapsulated in one or more buffer tubes (or one or more binders wherever applicable) 112 in the core 110. Particularly, the buffer tubes 112 may be made up of, but not limited to, PBT (polybutylene terephthalate), polypropylene (PP), polyamide, thermoplastic material or a combination of any suitable material. Moreover, one or more optical transmission elements 114 are provided in the form of one or more optical fiber ribbon(s)bundled using the or one or more binders 112 in the core 110.

The core 110 may be surrounded by the first layer 106. In particular, the first layer 106 is a flexible layer composed of water blocking tape (WBT), aramid yarns, glass roving yarns, water-swellable yarns, or any other suitable material facilitating longitudinal water ingression prevention. Moreover, the first layer 106 may be defined by a first shore D hardness of less than or equal to 20. Alternatively, the first shore D hardness may vary. Further, the first layer 106 is deformed (deformation is represented with reference numeral 116) radially towards a central axis (X), which is in a longitudinal direction of the optical fiber cable (as shown in FIG. 1, FIG. 2 and FIG. 3).

In accordance with an embodiment of the present disclosure, the first layer 106 may be surrounded by the second layer 102. Particularly, the second layer 102 is relatively harder than the first layer 106. Moreover, the second layer 102 may be defined by a second shore D hardness of greater than or equal to 40. Alternatively, the second shore D hardness may vary. Further, the second layer 102 may be a jacket or a sheath. The sheathing material for the sheath may include, but is not limited to, polyvinylchloride, polyethene (such as High-Density Poly Ethylene (HDPE), Medium Density Poly Ethylene, and Low-Density Poly Ethylene), polyurethane, thermoplastic rubber/elastomer, thermoplastic chlorinated polyethene or combination thereof.

In alternate embodiments, the second layer 102 may be a steel tape layer, ECCS (Electro Chrome Coated Steel) tape layer or any other suitable layer.

The second layer 102 may include one or more strength members 104 embedded in it. Particularly, the strength members 104 provide mechanical strength and stiffness to the optical fiber cable. Moreover, strength members 104 may provide enhanced break load and excellent crush protection/resistance performance. Further, the strength members 104 may be made of, but not limited to, FRP (Fiber Reinforced Plastic), ARP (Aramid-Reinforced Plastic) or any other suitable dielectric/strength material. The strength members 104 may have a round shape, a flat shape or any other suitable shape.

In accordance with an embodiment of the present disclosure, one or more strength members 104 are coated with EAA (Ethylene Acrylic Acid) or EVA (Ethylene-Vinyl Acetate) coating for better adhesion with the second layer 102, i.e., to enhance the adhesion of one or more strength members 104 with the second layer 102. Alternatively, the second layer 102 may not comprise the embedded strength members.

In an embodiment, the strength member 104 may be placed in the centre of the optical fiber cable (i.e., in the core 110), thus, may be referred to as a central strength member.

In accordance with an embodiment of the present disclosure, one or more ripcords 108 are placed between the first layer 106 and the second layer 102 such that one or more ripcords 108 has a degree of angular movement (Df) less than ±d. The "d" is the angular distance between two consecutive ripcords of the optical fiber cable. Such angular movement of one or more ripcords 108 is shown in FIG. 3. The first layer 106 may be deformed radially towards the central axis (X) in the vicinity of one or more ripcords 108. The deformation 116 of the first layer is equal to or greater than the diameter of one or more ripcords 108. In particular, one or more ripcords 108 may cause deformation 116 of the first layer 106 towards the centre of the optical fiber cable which is equal to or greater than the diameter of one or more ripcords 108.

As illustrated in fig. 3, where the WBT is the first layer 106, the WBT is bent, from the place where one or more ripcords 108 are present, towards the core 110. If one or more ripcord 108 moves to another position (i.e., from Position A to Position B as depicted by an arrow), the deformation 116 may also shift to the new position (i.e., from Position A to Position B). In such a case, the previous deformation (Position A) may get back to its original/normal condition.

In accordance with an embodiment of the present disclosure, the force required for the angular movement of one or more ripcords 108 may be less than 5N. Alternatively, the force required for the angular movement of one or more ripcords 108 may vary.

In accordance with an embodiment of the present disclosure, one or more ripcords 108 may have the angular movement of less than 180° in/for 1 meter of the optical fiber cable. Alternatively, one or more ripcords 108 may have the angular movement of less than 45° in/for 1 meter of the optical fiber cable. Alternatively, the angular movement may vary. One or more ripcords 108 may be movable in the clockwise and anti-clockwise directions.

In accordance with an embodiment of the present disclosure, one or more ripcords 108 may be made of nylon, polyester, aramid yarns or any other suitable material. The ripcords 108 may have a flat shape, monochord, cabled structure or any other suitable structure depending upon the requirement of the optical fiber cable. Further, one or more ripcords 108 may have a denier of 2000 to 4000. Alternatively, the denier may vary.

In accordance with an embodiment of the present disclosure, one or more ripcords 108 may have an elongation at the break between 15% to 30%, a breaking load of at least 10 Kgf(kilogram-force) and a number of plies up to 4. One or more ripcords 108 may be initially placed substantially 90° to 180° apart from each other in the optical fiber cable 200.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practise of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above-described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims

## Claims

1. An optical fiber cable (100, 200, 300), **characterized in that**:
a core (110) having one or more optical transmission elements (114);
a first layer (106) surrounding the core (110);
a second layer (102) surrounding the first layer (106), wherein the second layer (102) is relatively harder than the first layer (106); and
one or more ripcords (108) placed between the first layer (106) and the second layer (102) such that the one or more ripcords (108) have a degree of angular movement (D_{f}) less than ±d;
wherein d is an angular distance between two consecutive rip cords of the optical fiber cable.

2. The optical fiber cable (100, 200, 300) as claimed in claim 1, wherein a force required for the angular movement of the one or more ripcords (108) is less than 5N.

3. The optical fiber cable (100, 200, 300) as claimed in claim 1, wherein the first layer (106) is defined by a first shore D hardness of less than or equal to 20.

4. The optical fiber cable (100, 200, 300) as claimed in claim 1, wherein the second layer (102) is defined by a second shore D hardness of greater than or equal to 40.

5. The optical fiber cable (100, 200, 300) as claimed in claim 1, wherein the one or more rip cords (108) have the angular movement of less than 180° in 1 meter of the optical fiber cable.

6. The optical fiber cable (100, 200, 300) as claimed in claim 1, wherein the one or more rip cords (108) have the angular movement of less than 45° in 1 meter of the optical fiber cable.

7. The optical fiber cable (100, 200, 300) as claimed in claim 1, wherein the first layer (106) is deformed radially towards a central axis (X) of the optical fiber cable.

8. The optical fiber cable (100, 200, 300) as claimed in claim 1, wherein the first layer (106) is deformed in vicinity of the one or more ripcords (108).

9. The optical fiber cable (100, 200, 300) as claimed in claim 7, wherein deformation (116) of the first layer (106) is equal to or greater than a diameter of the one or more ripcords (108).

10. The optical fiber cable (100, 200, 300) as claimed in claim 1, wherein the second layer (102) is configured to embed one or more strength members (104).

11. The optical fiber cable (100, 200, 300) as claimed in claim 1, wherein the one or more strength members 104 is made of FRP (Fiber Reinforced Plastic), ARP (Aramid-Reinforced Plastic) or any other suitable dielectric/strength material.

12. The optical fiber cable (100, 200, 300) as claimed in claim 1, wherein the one or more strength members (104) are coated with EAA (Ethylene Acrylic Acid) or EVA (Ethylene-Vinyl Acetate) coating.

13. The optical fiber cable (100, 200, 300) as claimed in claim 1, wherein the one or more strength members (104) is a central strength member.

14. The optical fiber cable (100, 200, 300) as claimed in claim 1, wherein the ripcords (108) have a flat shape, monochord, cabled structure depending on user requirement.

15. The optical fiber cable (100, 200, 300) as claimed in claim 1, wherein the one or more optical transmission elements (114) are encapsulated in one or more buffer tubes (112) in the core (110).
